# EUROPÄISCHE PATENTSCHRIFT

(11) **EP 0 956 706 B1**
(45) Veröffentlichungstag und Bekanntmachung des Hinweises auf die Patenterteilung: **03.07.2002**
(21) Anmeldenummer: 98901961.7
(22) Anmeldetag: 13.01.1998
(51) Int. Cl.: H04N 9/31

(54) **VERFAHREN UND VORRICHTUNG ZUR BESEITIGUNG VON BILDSPECKLES BEI SCANNENDER LASERBILDPROJEKTION**
METHOD AND DEVICE FOR ELIMINATING IMAGE SPECKLES IN SCANNING LASER IMAGE PROJECTION
PROCEDE ET DISPOSITIF POUR ELIMINER LE CHATOIEMENT D'IMAGE LORS DE PROJECTION D'IMAGE LASER A BALAYAGE

(30) Priorität: 31.01.1997 DE 19703730
(43) Veröffentlichungstag der Anmeldung: 17.11.1999
(73) Patentinhaber: EADS Deutschland GmbH, 81663 München (DE)
(72) Erfinder: WANG, Lingli, D-64293 Darmstadt (DE); TSCHUDI, Theo, D-64293 Darmstadt (DE); HALLDORSSON, Thorsteinn, D-81925 München (DE); PETURSSON, Palmi, D-85635 Höhenkirchen (DE)
(74) Vertreter: Ulrich, Thomas
(86) Internationale Anmeldenummer: EP9800134
(87) Internationale Veröffentlichungsnummer: WO9834409

(56) Entgegenhaltungen:
- EP-A- 0 589 179
- WO-A-95/10159
- DE-A- 19 508 754

## Beschreibung

Die Erfindung betrifft ein Verfahren zur Beseitigung von Bildspeckeles bei scannender Leserbildprojektion, bei dem mittels eines Fasenhologramms oder einer strahlformenden Einrichtung der Beleuchtungsstrahl eines Projektors in Teilstrahlen aufgeteilt wird. Weiterhin betrifft die Erfindung eine Vorrichtung zur Beseitigung von Bildspeckeles bei scannender Laserbildprojektion, mit einem Projektor zur Erzeugung eines Beleuchtungsstrahls und einer Einrichtung zum aufteilen des Beleuchtungsstrahls in Teilstrahlen.

Bei der Verwendung von Lasern zur Beleuchtung oder Bilddarstellung auf einer Projektionsfläche treten aufgrund der Rauhigkeit der Fläche im Raum vor der Fläche Interferenzen durch Laufzeitunterschiede der von verschiedenen Teilen der Fläche ausgehenden Wellen auf. Im Auge des Betrachter führen die Interferenzen zu einer starken zusätzlichen Intensitätsmodulation der Helligkeitsverteilung des Schirmes, die das Bild wie ein feines Granulationsmuster überzieht. Dieser zusätzliche Rauschanteil im Bild reduziert die wahrnehmbare Auflösung bis zum Faktor 10 und führt in mehrfarbigen Laserbildern zu Farbverfälschung durch unvollständige Farbsummation (siehe dazu z.B. J.M. Artigas, A. Felipe and M.J. Buades, "Contrast sensitivity of the visual system in speckle imagery", J. Opt. Soc. Am. A, Vol 11, No.9 p. 2345, (1994)).

In den letzten Jahren haben sich die technischen Voraussetzungen zur Realisierung des Laserprojektors mit gescannten Laserstrahlen erheblich verbessert, wie z.B. in dem Artikel von C.Deter, "Laser-Display-Technologie-wo stehen wir?" in der Zeitschrift Physikalische Blätter, 52 (1996) Nr. 11, Seite 1129 dargestellt ist. Heute können wesentlich effizientere und kostengünstigere diodenangeregte Festkörperlaser oder Faserlaser bzw. auch in Zukunft Laserdioden mit einer elektrisch/optischen Effizienz von 10-30% für die monochromatische Bildprojektion in der Farben Rot, Grün, Blau (RGB) eingesetzt werden. Siehe dazu z.B. W. E. Glenn and G.J. Dixon, "Bright future projected for lasers in electronic cinemas", Laser Focus World, Nov 1993, p. 73.

Unseres Wissens sind keine Methoden bekannt zur Reduktion oder sogar Elimination der Laserspeckles in Laserstrahl-Projektionssystemen, die nicht gleichzeitig die Bildqualität so verschlechtern, daß die Vorteile der Laserstrahlung verschwindet, bzw. daß ihr Einsatz kaum technisch-wirtschaftliche Vorteile bringt.

Grundsätzlich gibt es verschiedene Methoden zur Reduktion von Laserspeckles. Insbesondere in der Laser- und Elektronenstrahltechnik sind verschiedene Methoden für die Specklereduktion bekannt: Beispielhaft sollen hier nur die folgenden genannt werden: Bewegte Mattscheiben oder Phasenplatten, statistisch angesteuerte Flüssigkristallzellen, Glasfaserbündel mit unterschiedlichen Laufzeiten, bewegte Glasfasern, Verbreiterung der Linienbreite der Laser, usw.

Beispielsweise zeigt die Druckschrift DE19508754A1 ein Verfahren zum Vermindern von Intereferzen eines koharenten Lichtbündels, wobei das Lichtbündel senkrecht zur Ausbreitungsrichtung örtlich unterschiedlich polarisiert wird. Dabei wird ein doppelbrechender Kristall mit unterschiedlichen Dicken in den Strahlengang gebracht, um die unterschiedlichen Polarisationszustände beim austretenden Licht zu erzeugen. Die unterschiedlichen Polarisationszustände des Lichts sollen nicht mehr vollständig miteinander interferieren können.

Die Druckschrift WO95/10159 zeigt ein Bildprojektionssystem mit einer Anordnung von Lasern, deren Ausgangsstrahlen in einem Prisma vereinigt werden. Entstehende Bildspeckels werden mit einer bewegten Mattscheibe reduziert.

Die Druckschrift EP0589179A1 zeigt ein Displaysystem, daß koharentes Licht verwendet, wobei das Licht zur Reduktion der Bildspeckels ebenfalls eine bewegte Mattscheibe durchläuft.

Diese Methoden funktionieren aber nur im Nahfeld des projizierten Bildpixels auf dem Projektionsschirm. Für den Beobachter im Fernfeld sind die Laufzeitunterschiede so klein, daß die Speckles nicht verschwinden. Die Methoden zur Zerstörung der örtlichen Kohärenz führen zu einer sehr starken Strahldegradation, was zur Folge hat, daß ein evtl. wiederaufbereiteter Strahl nur noch wenig Intensität besitzt. Die bekannten Methoden zur Zerstörung der zeitlichen Kohärenz haben im allgemeinen nur eine sehr begrenzte Erhöhung der Emissionsbandbreite zur Folge, und die resultierende Kohärenzlänge ist immer noch größer als die größten Wegunterschiede von den Rändern des projizierten Pixels bis zum Beobachter.

Die Verwendung kürzester Laserpulse (unter 1 ps) zur Reduktion der Kohärenzlänge des Lasers und damit Verminderung der Interferenzfähigkeit des Lichtes ist mit einem enormen technischen Aufwand verbunden.

Der Erfindung liegt die Aufgabe zugrunde, speziell für die Laserstrahlprojektion eine Einrichtung zu schaffen, die die Speckles beim Beobachter weitgehend eliminiert bzw. reduziert, die Strahlform und die Strahldichte jedoch kaum bzw. nicht ändert.

Gemäß der Erfindung wird die Aufgabe durch ein Verfahren gelöst, bei dem mittels eines Phasenholograms oder einer Strahlformenden Einrichtung der Beleuchtungsstrahl eines Projektors in Teilstrahlen aufgeteilt wird, wobei jeder der Teilstrahlen eine kleinere Fläche ausleuchtet, als der Beleuchtungsstrahl, und wobei die Teilstrahlen auf einem Bildschirm innerhalb eines projezierenden Bildelelemts bewegt und wieder so überlagert werden, daß unterschiedliche Specklepatterns entstehen, die sich im Auge des Beobachters zeitlich/oder örtlich ausmitteln.

Die erfindungsgemäße Ausrichtung zur Beseitigung von Bildspeckles bei scannender Laserbildprojektion umfaßt einen Projektor zur Erzeugung eines Beleuchtungsstrahls und eine Einrichung zur Aufteilung des Beleuchtungsstrahls in Teilstrahlen, wobei die Einrichtung zur Aufteilung des Beleuchtungsstrahls ein Phasenhologram oder eine strahlformende Einrichtung ist, und wobei jeder der erzeugten Teilstrahlen eine kleinere Fläche ausleuchtet als - der Beleuchtungsstrahl, und wobei Mittel vorgesehen sind, welche die Teilstrahlen auf einem Bildschirm innerhalb eines zu projezierenden Bildelements bewegen und wieder so überlagern, daß unterschiedliche Specklepatterns entstehen, die sich im Auge des Beobachters zeitlich/oder örtlich ausmitteln.

Die Erfindung basiert auf der experimentellen Tatsache, daß die Specklemodulation im Auge eines Beobachters abnimmt, wenn er seinen Kopf schnell bewegt, d.h. wenn das Auge über die Specklebilder zeitlich und örtlich mittelt. Ebenso bringt eine Bewegung des Projektionsschirmes das Specklemuster zum Verschwinden. Das Bewegen des Projektionsschirmes ist zwar durchführbar und soll nachgehend im Detail beschrieben werden, ist jedoch für größere Schirme umständlich und aufwendig.

Diese Aufgabe wird im Sinne der Erfindung insbesondere mit Hilfe eines Phasenhologramms mit hohem Beugungswirkungsgrad in Kombination mit dem Streuverhalten des Projektionsschirmes gelöst. Durch das in den Strahlengang eingesetzte Hologramm wird auf geeignete Weise der Laserstrahl in verschiedene Teilstrahlen geteilt, wobei jeder der erzeugten Teilstrahlen eine kleinere Fläche ausleuchtet als der ursprüngliche Laserstrahl. Auf dem Projektionsschirm wird nun von jedem Teilstrahl ein unterschiedliches Specklemuster erzeugt. Dabei geht die momentane Oberflächenrauhigkeit/Topographie massgebend in die Specklebildung ein.

Durch Bewegen der Teilstrahlen über die Pixelfläche des zu erzeugenden Bildflecks, z.B. durch eine Rotation des Hologrammes oder Einbau in den Strahlengang des Bildabtastens mittels eines Scannners (Strahlablenkers) oder irgend eine andere denkbare Einrichtung zur Strahlbwegung ergibt sich für jeden Teilstrahl ein unterschiedliches, sich bewegendes Specklefeld. Der Beobachter sieht nun die Überlagerung aller durch die bewegten Teilstrahlen erzeugten Specklebilder gleichzeitig. Durch den Integrationsprozess im Auge wird dadurch der Specklekontrast örtlich und zeitlich ausgemittelt. Für das Auge des Beobachters sind die Speckles verschwunden.

Für das hierfür eingesetzte Phasenhologramm können die bekannten Prinzipien und Herstellungsarten benutzt werden. Wichtig sind dabei das Beibehalten einer guten Strahlkollimierung und ein großer Beugungswirkungsgrad. Dies kann z.B. durch ein Mehrphasenhologramm erreicht werden. Das Hologramm kann z.B. vor dem Bildscannersystem angeordnet werden, oder nach dem Bildscanner in einer Zwischenbildebene der Projektionslinse, oder an einer anderen geeigneten Stelle.

Die Bewegung der Teilstrahlen kann dadurch erreicht werden, daß z.B. das Phasenhologramm um seine optische Achse gedreht wird, oder daß die Strahlen durch den Scanner selbst auf dem Schirm bewegt werden. Es können aber auch andere bekannte Bildrotationsprinzipien eingesetzt werden. Die Rotationsgeschwindigkeit des Hologramms ist an das Scannersystem anzupassen bezüglich der Faktoren: Integrationszeit des Auges, Bildfrequenz, Anzahl der projizierten Pixel pro Bild, Geometrie des Zuschauerraumes etc..

Wie experimentell gezeigt wurde, ist es auch möglich, Rotation und Translationsbewegung durch den Scanner der Teilstrahlen gleichzeitig zu verwenden.

Die einzige Anforderung an den Bildschirm ist, daß er nicht als optischer Spiegel im eigentlichen Sinne ausgebildet ist. Dies ist keine Einschränkung für die Erfindung, denn nach Reflexionen am Spiegel entstehen keine oder nur geringe Speckles und ein Spiegel ist ohnehin ausgeschlosssen, da in einem solchen Falle die Projektionsgeometrie nur für einen Raumpunkt erfüllt wäre und dehalb ein Beobachten des Bildes mehr oder weniger ausgeschlossen wäre.

Um die Aufspaltung eines Laserstrahls durch ein Phasenhologramm in Teilstrahlen zu erreichen, sind die beugenden Strukturen gitterförmig (regelmässig oder unregelmässig) in zwei Dimensionen angeordnet. Diese gitterförmige Struktur wird zur Formung der enstandenen Teilstrahlen (Kollimation, Fokussierung) mit einer weiteren Struktur versehen, die gleich oder ähnlich der einer Fresnelschen Zonenplatte aussehen kann.

Diese Basistruktur kann für jeden Teilstrahl einzeln als Array im Hologramm eingeschrieben werden, oder aber für alle Teilstrahlen über die ganze Hologrammfläche verteilt werden. Die Struktur kann aber auch über direkte Fouriertranformation oder andere entsprechende Formalismen berechnet werden.

Ein nach obigen Anleitungen geschriebenes einzelnes Hologramm kann direkt verwendet werden. Es kann aber vorteilhaft sein, diese Hologrammstruktur zu vervielfältigen und in einer Anordnung als Array zu benutzten. Dadurch wird eine Redundanz der strahlformenden Elemente erreicht, aber auch eine weitgehende Unabhängigkeit des Systems vom verwendeten Strahlquerschnitt und Intensitätsverteilung auf der Hologrammplatte. Ebenso ist eine genaue Zentrierung des Hologramms zur Strahlachse nicht mehr notwendig.

Die Erfindung wird im folgenden anhand der Figuren und der Beschreibung schematisch dargestellt. Es zeigen:
- Fig. 1:: eine schematische Darstellung der Entstehung der Speckles im Raum vor einem Bildschirm im Nahfeld,
- Fig. 2:: eine schematische Darstellung der Enstehung der Speckles im Raum vor einem Bildschirm im Fernfeld,
- Fig. 3:: eine schematische Darstellung der Strahlgeometrie bei der Laserprojektion
a) ohne Aufteilung des Beleuchtungsstrahles,
b) nach Aufteilung des Beleuchtungsstrahles in eine Anzahl von Teilstrahlen durch das Phasenhologramm und
- Fig. 4:: eine Kamera-Aufzeichnung der gesehenen Intensitätsverteilung im Femfeld des Bildflecks
a) ohne Phasenhologram und
b) mit Phasenhologramm.

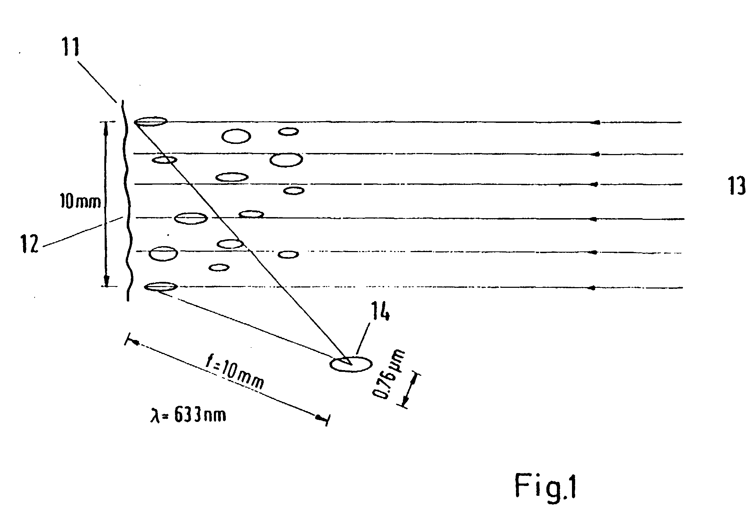

Fig. 1 zeigt Speckles im Nahfeld des Projektionsschirms 11. Bei 10 mm Entfernung von einem Bildfleck 12 eines einfallenden Projektionsstrahls 13 von 10 mm Durchmesser, haben die Speckles 14 einen Durchmesser der Größenordnung von etwa einem µm bei der Wellenlänge λ = 633 nm. Durch eine relative Phasenverschiebung zwischen dem unteren und oberen Rand von bis zu 2π ist es möglich, ein Speckle über seinen Durchmesser zu verschieben und dadurch im Auge des Beobachters örtlich und zeitlich wegzumitteln.

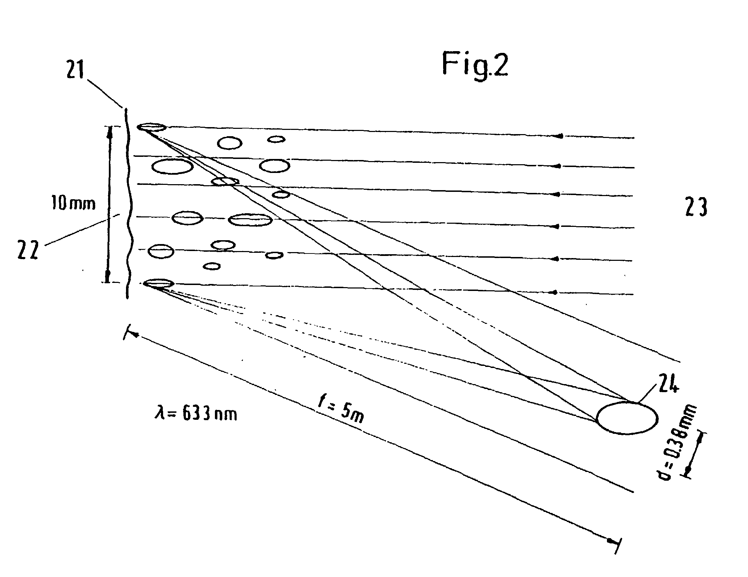

Fig. 2 zeigt Speckles im Fernfeld des Projektionsschirms 21, entsprechend der Situation bei Laser-Großbildprojektion, mit einem Beobachtungsabstand von 5 m und einem Bildfleckdurchmesser 22 von 10 mm. Die Speckles am Ort des Beobachters 23 sind bereits mit etwa 0,5 mm relativ groß. Eine relative Phasenschiebung des oberen zum unteren Rand des Beleuchtungsstrahles bringt nur eine unmerkliche Verschiebung des Speckles beim Beobachter, eine Reduktion des Specklekontrastes ist dadurch nicht möglich.

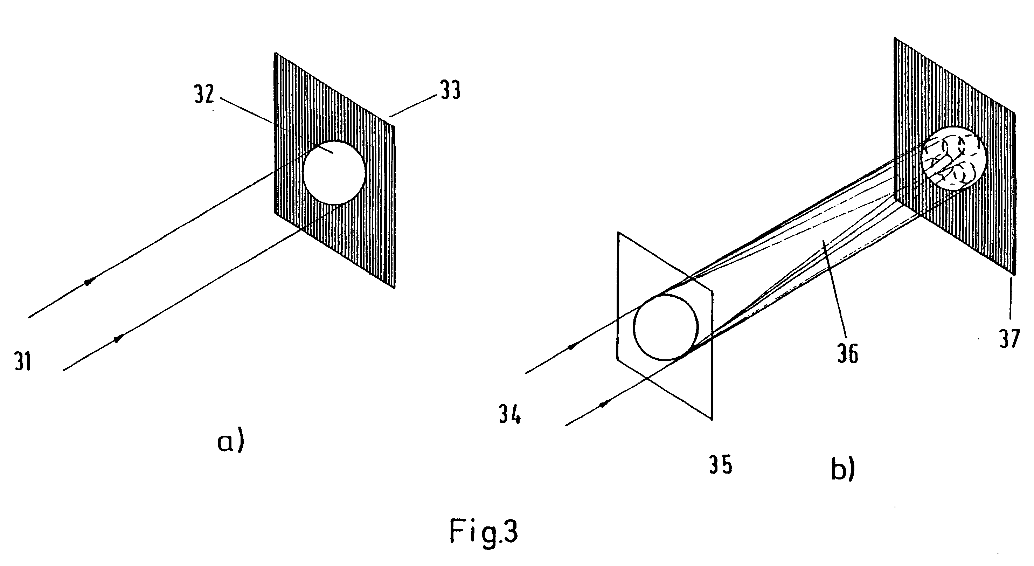

Fig. 3: zeigt die Strahlgeometrie für die Reduktion der räumlichen Kohärenz der vom Bildschirm gestreuten Lichtverteilung. Nach Fig. 3a) beleuchtet der unbehandelte Projektionsstrahl 31 ein Bildelement (Pixel) 32 auf dem Bildschirm 33. Es treten Speckels wie in Fig. 2 auf. Nach Fig. 3b) wird der Laserstrahl 34 mittels eines Phasenhologramms 35 in N Teilstrahlen 36 aufgeteilt, die auf dem Bildschirm 37 nur teilweise oder gar nicht überlagert werden. Damit erzeugt jeder Teilstrahl sein eigenes Specklemuster, das von der jeweiligen Oberfläche des Schirmes abhängig ist. Eine Bewegung der kleinen Spots führt zu einer Bewegung der einzelnen Specklepattern. Diese überlagern sich beim Beobachter so, daß im Zeit- und Ortsmittel die Speckles nicht mehr beobachtet werden.

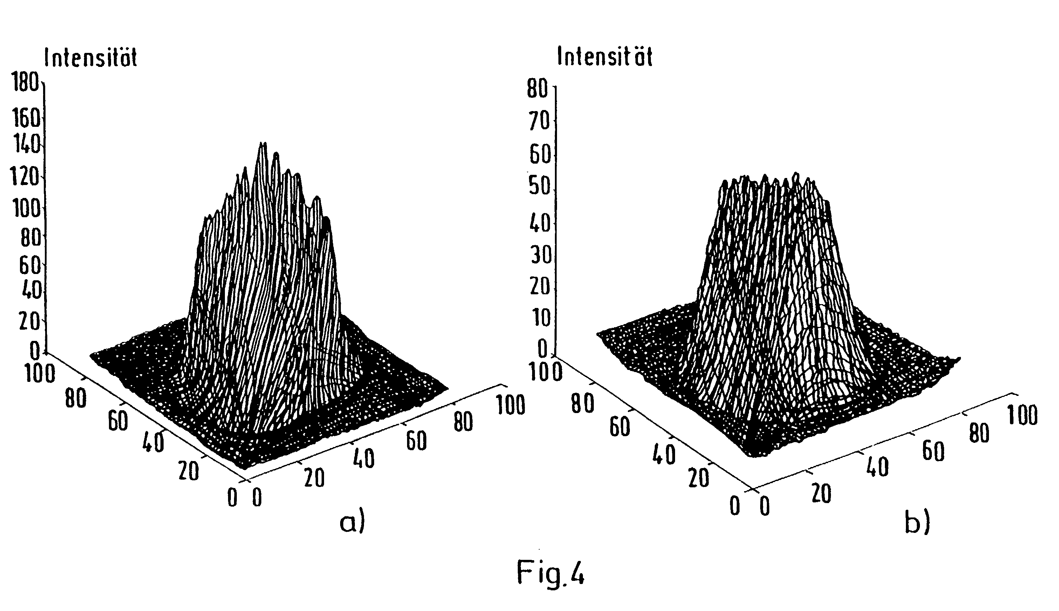

Fig. 4 zeigt ein Beispiel einer Intensitätsverteilung eines Bildelementes (Pixel) beim Beobachter. In Fig. 4a) wird ein unmodifizierter Laserstrahl verwendet. Speckles zeigen eine hohe Modulation der Intensitätsverteilung. In Fif. 4b) erfolgt die Beleuchtung des Pixels mit 64 Teilstrahlen. Die durch die Speckle autretende Intensitätsmodulation ist stark unterdrückt.

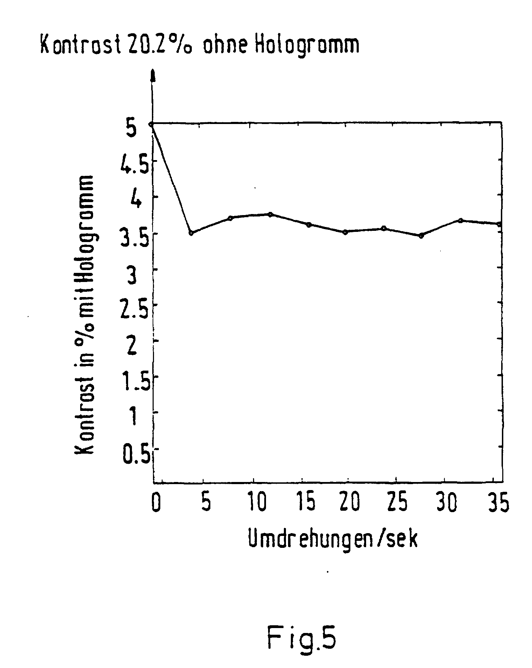

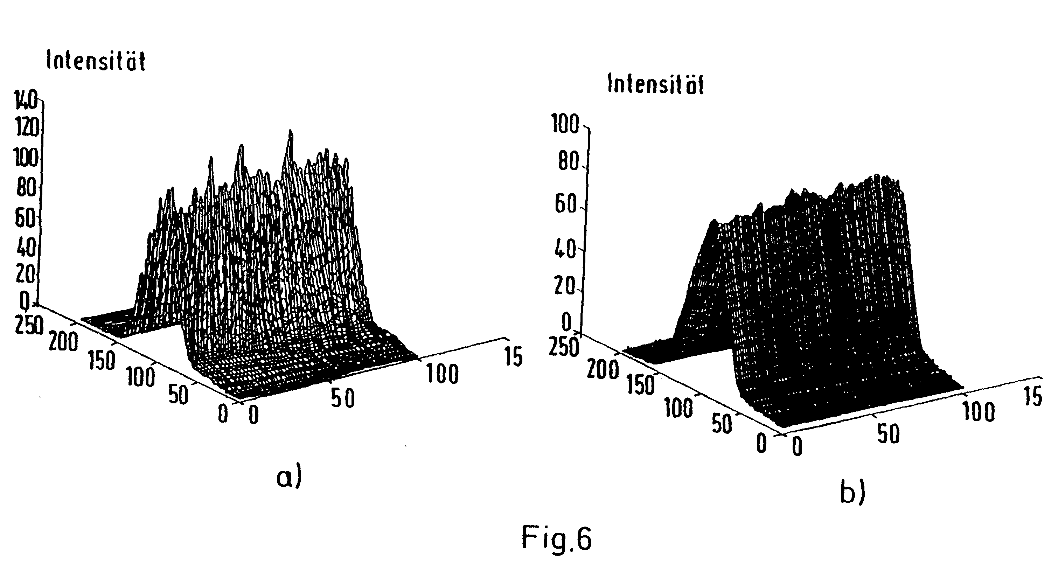

Fig. 5 zeigt den gemessenen Kontrast über den Bildfleck in Prozent als Funktion der Drehzahl des Phasenhologramms und Fig. 6 den gemessenen Kontrast innerhalb einer gescannten Bildzeile am Ort des Beobachters, und zwar in Fig. 6a) ohne Phasenhologramm und in Fig. 6b) mit stillstehendem Hologramm.

Für die Berechnung der Hologrammstruktur sind fast alle der heute bekannten Berechnungsalgorithmen geeignet.

Um hohe Beugungswirkungsgrade zu erhalten, sind Phasenhologramme mit mehreren Phasenstufen oder sogar geblazde Strukturen notwendig. Es hat sich in Experimenten gezeigt, daß z.B. 4-16 Phasenstufen ausreichend sind.

Die Strukturen können mit Laserstrahlschreibern, Elektronenstrahlschreibern etc., aber auch über geeignete Verkleinerungsverfahren anders gezeichneter Strukturen hergestellt werden. Dabei treten bei typischen Strahldurchmessern von 5-10 mm ebensolche Durchmesser der Phasenplatten auf (5-10 mm). Die Strukturgrößen im Hologramm liegen typisch im µm-Bereich und größer. Die Herstellung kann in Photoresisttechnik, über Aufbautechnik mit mehreren Schichten, chemisches Ätzen oder Ionenstrahlätzen in Glas oder andere Materalien oder mittels anderer bereits existierender Aufzeichnungsverfahren bewerkstelligt werden. Wichtig ist vor allem ein hoher Beugungswirkungsgrad vom hergestellten Element.

Der ursprünglich Laserstrahl wurde in 4, 8, 16, 32, 64,128 Teiltrahlen geteilt. Experimentell wurde gefunden, daß 16 Teilstrahlen genügen und gute Resultate bringen. Mit 32, 64 und 128 Teilstrahlen ist das Resultat bezüglich Specklereduktion ähnlich.

Die Herstellung des Hologramms kann aber auch auf photographischem oder anderen bekannten Wegen in eine dünne oder dicke Hologrammschicht eingeschrieben werden.

Es versteht sich, daß das Phasenhologramme im Sinne der Erfindung bei mehrfarbiger Projektion z.B. mit den rot, grün und roter (RGB) Farbe, entweder als einzelnes Hologramm nach der Zusammenführung aller Farben im Strahlengang oder auch als getrennte Phasenhologramme zur besonderen Optimierung in den einzelnen Farbkanälen eingebaut werden kann

Die Beseitigung der Speckles mit Phasenhologrammen im Sinne der Erfindung, kann nicht nur bei Projektionssystemen für Vollbilder, sondern auch für Schriftzüge und Zeichnungen eingesetzt werden.

Weiterhin kann das Phasenhologramm im Sinne der Erfindung nicht nur bei Aufprojektion auf Schirme, sondern auch zur Speckleminderung bei Rückprojektion von lichttransmittierenden Schirmen bzw. bei einer gescannten Ausleuchtung von Hologrammen verwendet werden.

## Patentansprüche

1. Verfahren zur Beseitigung von Bildspeckles bei scannender Laserbildprojektion, bei dem mittels eines Phasenhologramms (35) oder einer strahlformenden Einrichtung der Beleuchtungsstrahl (34) eines Projektors in Teilstrahlen (36) aufgeteilt wird, **dadurch gekennzeichnet, daß**
jeder der erzeugten Teilstrahlen (36) eine kleinere Fläche ausleuchtet als der Beleuchtungsstrahl (34),
wobei die Teilstrahlen (36) auf einem Bildschirm (37) innerhalb eines zu projizierenden Bildelements (32) bewegt und wieder so überlagert werden, daß unterschiedliche Specklepatterns entstehen, die sich im Auge des Beobachters zeitlich und/oder örtlich ausmitteln.

2. Verfahren nach Anspruch 1, **dadurch gekennzeichnet, dass** als strahlformende Einrichtung ein Linsenarray oder eine Fresnelzonenplatte verwendet wird.

3. Vorrichtung zur Beseitigung von Bildspeckles bei scannender Laserbildprojektion, mit einem Projektor zur Erzeugung eines Beleuchtungsstrahls (34), und
einer Einrichtung zum Aufteilen des Beleuchtungsstrahls (34) in Teilstrahlen (36), **dadurch gekennzeichnet, daß**
die Einrichtung zum Aufteilen des Beleuchtungsstrahls ein Phasenhologramm (35) oder eine strahlformende Einrichtung ist, wobei
jeder der erzeugten Teilstrahlen (36) eine kleinere Fläche ausleuchtet als der Beleuchtungsstrahl (34), und
Mittel vorgesehen sind, die die Teilstrahlen (36) auf einem Bildschirm (37) innerhalb eines zu projizierenden Bildelements (32) bewegen und wieder so überlagern, daß unterschiedliche Specklepatterns entstehen, die sich im Auge des Beobachters zeitlich und/oder örtlich ausmitteln.

4. Vorrichtung nach Anspruch 3, **dadurch gekennzeichnet, daß** die strahlformende Einrichtung drehbar oder seitwärts periodisch auslenkbar ist, so daß die Teilstrahlen (36) auf dem Bildschirm (37) bewegbar sind.

5. Vorrichtung nach Anspruch 3, **dadurch gekennzeichnet, daß** die Struktur des Phasenhologramms (35) beispielsweise mit einer extern ansteuerbaren Flüssigkristallzelle zeitlich veränderbar ist, und damit eine Bewegung der Teilstrahlen (36) auf dem Bildschirm (37) erfolgt.

6. Vorrichtung nach Anspruch 3, **dadurch gekennzeichnet, daß** ein optischer Bildrotator oder ein anderes vergleichbares Element hinter dem Phasenhologramm (35) angeordnet ist, das eine Drehbewegung der Teilstrahlen (36) ausübt.

7. Vorrichtung nach dem Verfahren gemäß Anspruch 3 oder 4, **dadurch gekennzeichnet, daß** sich das Phasenhologramm (35) hinter, vor oder innerhalb einer Scannnereinrichtung befindet

8. Vorrichtung nach Anspruch 3, **dadurch gekennzeichnet, daß** das Phasenhologramm (35) in einer Zwischenbildebene eines Projektionsobjektives eines Bildprojektors liegt.

9. Vorrichtung nach Anspruch 3, **dadurch gekennzeichnet, daß** das Phasenhologramm (35) stillsteht und die Teilstrahlen (36) mittels eines Bildscanners oder anderen entsprechenden Einrichtungen über den Bildschirm (37) bewegbar sind.

10. Vorrichtung nach Anspruch 3, **dadurch gekennzeichnet, daß** zur Bewegung eine Einrichtung zur Translation oder Rotation des Phasenhologramms (35) vorgesehen ist.

11. Vorrichtung nach Anspruch 3, **dadurch gekennzeichnet, daß** bei Farbprojektion ein einziges Phasenhologramm (35) gleichzeitig für die drei Grundfarben vorgesehen ist.

12. Vorrichtung nach Anspruch 3 **dadurch gekennzeichnet, daß** bei Farbprojektion für jede Farbe ein separates Phasenhologramm (35) vorgesehen ist.

13. Vorrichtung nach Anspruch 3, **dadurch gekennzeichnet, daß** zusätzlich zum Phasenhologramm (35) weitere optische Elemente zur Mitformung des Strahlprofils zusätzlich vorgesehen sind.

14. Vorrichtung nach Anspruch 3, **dadurch gekennzeichnet, daß** zur Bildwiedergabe ein Aufprojektionsschirm, ein Rückprojektionsschirm oder ein Hologramm vorgesehen ist.

## Claims

1. A method of eliminating image speckles in scanning laser image projection, wherein the illuminating beam (34) of a projector is split into partial beams (36) by means of a phase hologram (35) or a beam-forming arrangement, **characterised in that**
each of the generated partial beams (36) illuminates a smaller area than the illuminating beam (34),
wherein the partial beams (36) are moved on a screen (37) within a picture element (32) to be projected and superimposed again so that different speckle patterns are produced which temporally and/or locally average out in the eye of the observer.

2. A method according to claim 1, **characterised in that** a lens array or a Fresnel lens is used as a beam-forming arrangement.

3. A device for eliminating image speckles in scanning laser image projection, comprising a projector for generating an illuminating beam (34) and an arrangement for splitting the illuminating beam (34) into partial beams (36), **characterised in that**
the arrangement for splitting the illuminating beam is a phase hologram (35) or a beam-forming arrangement, wherein
each of the generated partial beams (36) illuminates a smaller area than the illuminating beam (34), and
means are provided which move the partial beams (36) on a screen (37) within a picture element (32) to be projected and superimpose them again so that different speckle patterns are produced which temporally and/or locally average out in the eye of the observer.

4. A device according to claim 3, **characterised in that** the beam-forming arrangement is rotatable or periodically laterally deflectable so that the partial beams (36) are movable on the screen (37).

5. A device according to claim 3, **characterised in that** the structure of the phase hologram (35) is temporally changeable, e.g. by means of an externally activatable liquid crystal cell, and the partial beams (36) are thereby moved on the screen (37).

6. A device according to claim 3, **characterised in that** an optical image rotator or other comparable element is arranged behind the phase hologram (35) and executes a rotational movement of the partial beams (36).

7. A device according to claim 3 or 4, **characterised in that** the phase hologram (35) is arranged behind, in front of or inside a scanner arrangement.

8. A device according to claim 3, **characterised in that** the phase hologram (35) lies in an intermediate image plane of a projection lens of an image projector.

9. A device according to claim 3, **characterised in that** the phase hologram (35) is stationary and the partial beams (36) are movable over the screen (37) by means of an image scanner or other corresponding arrangements.

10. A device according to claim 3, **characterised in that** an arrangement for translation or rotation of the phase hologram (35) is provided for movement.

11. A device according to claim 3, **characterised in that**, in colour projection, a single phase hologram (35) is simultaneously provided for the three primary colours.

12. A device according to claim 3, **characterised in that**, in colour projection, a separate phase hologram (35) is provided for each colour.

13. A device according to claim 3, **characterised in that**, in addition to the phase hologram (35), further optical elements are additionally provided for co-formation of the beam profile.

14. A device according to claim 3, **characterised in that**, for image reproduction, a front projection screen, a rear projection screen or a hologram is provided.

## Revendications

1. Procédé pour éliminer les tavelures d'image (chatoiement) dans la projection d'images par balayage avec un laser, selon lequel un hologramme de phase (35) ou une installation formant des faisceaux divise les faisceaux d'illumination (34) d'un projecteur en faisceaux partiels (36)
**caractérisé en ce que**
chacun des faisceaux partiels (36) obtenus illumine une plus petite surface que celle du faisceau d'illumination (34),
les faisceaux partiels (36) sont déplacés sur l'écran image (37) à l'intérieur de l'élément image (32) à projeter et sont de nouveau combinés pour former des modèles de tavelure différents qui donnent une moyenne dans le temps et/ou dans l'espace dans l'oeil de l'observateur.

2. Procédé pour éliminer les tavelures d'image selon la revendication 1,
**caractérisé en ce que**
l'installation formant le faisceau est un réseau de lentilles ou une plaque à zones de Fresnel.

3. Dispositif pour éliminer les tavelures d'image (chatoiement d'image) dans la projection d'images à balayage par laser, comprenant un projecteur générant un faisceau d'illumination (34) et une installation pour diviser le faisceau d'illumination (34) en faisceaux partiels (36),
**caractérisé en ce que**
l'installation pour diviser le faisceau d'illumination comprend un hologramme de phase (35) ou une installation formant des faisceaux,
chaque faisceau partiel (36) obtenu illumine une plus petite surface que le faisceau d'illumination (34), et
des moyens déplacent les faisceaux partiels (36) sur l'écran image (37) dans un élément image (32) à projeter et combinent de nouveau les faisceaux partiels pour former des modèles de tavelures différents qui donnent une moyenne dans le temps et/ou dans l'espace dans l'oeil de l'observateur.

4. Dispositif selon la revendication 3,
**caractérisé en ce que**
l'installation formant le faisceau est périodiquement déviée en rotation ou latéralement, pour déplacer les faisceaux partiels (36) sur l'écran d'image (37).

5. Dispositif selon la revendication 3,
**caractérisé en ce que**
la structure de l'hologramme de phase (35) est modifiée dans le temps par exemple avec les cellules à cristaux liquides commandées de manière externe pour faire bouger ainsi les faisceaux partiels (36) sur l'écran image (37).

6. Dispositif selon la revendication 3,
**caractérisé par**
un rotateur optique d'image ou autre élément comparable placé derrière l'hologramme de phase (35) pour faire tourner les faisceaux partiels (36).

7. Dispositif selon l'une des revendications 3 ou 4,
**caractérisé en ce que**
l'hologramme de phase (35) se trouve derrière, devant ou à l'intérieur d'une installation de balayage.

8. Dispositif selon la revendication 3,
**caractérisé en ce que**
l'hologramme de phase (35) se situe dans le plan image intermédiaire d'un objectif de projection d'un projecteur d'image.

9. Dispositif selon la revendication 3,
**caractérisé en ce que**
l'hologramme de phase (35) est fixe et les rayons partiels (36) sont déplacés à l'aide d'un dispositif de balayage d'images ou autre installation correspondante sur l'écran image (37).

10. Dispositif selon la revendication 3,
**caractérisé par**
une installation de translation ou de rotation de l'hologramme de phase (35) pour assurer le déplacement.

11. Dispositif selon la revendication 3,
**caractérisé en ce que**
pour la projection en couleur il est prévu un unique hologramme de phase (35) appliqué simultanément aux trois couleurs de base.

12. Dispositif selon la revendication 3,
**caractérisé en ce que**
pour la projection en couleur il est prévu un hologramme de phase (35) distinct pour chaque couleur.

13. Dispositif selon la revendication 3,
**caractérisé par**
d'autres éléments optiques en plus de l'hologramme de phase (35) pour participer à la formation du profil du faisceau.

14. Dispositif selon la revendication 3,
**caractérisé en ce que**
pour la reproduction de l'image il est prévu un écran de projection, un écran de rétroprojection ou un hologramme.
